Europäisches Patentamt

European Patent Office

Office européen des brevets

(19)

(11) Publication number: **0 320 181**
**A2**

## EUROPEAN PATENT APPLICATION

(21) Application number: **88311444.9**

(22) Date of filing: **02.12.88**

(51) Int. Cl.⁴: **H04N 7/22 , H04N 7/173**

(30) Priority: **11.12.87 US 131812**

(43) Date of publication of application:
**14.06.89 Bulletin 89/24**

(84) Designated Contracting States:
**AT BE CH DE ES FR GB GR IT LI NL SE**

(71) Applicant: **GENERAL INSTRUMENT
CORPORATION
767 Fifth Avenue
New York New York 10153(US)**

(72) Inventor: **Paik, Woo H.
11461 Caminito Carcia
San Diego California 92131(US)**

(74) Representative: **Blatchford, William Michael et
al
Withers & Rogers 4 Dyer's Buildings Holborn
London EC1N 2JT(GB)**

(54) **CATV system with shared fibre optic link.**

(57) A CATV system uses a single optical fiber (11) for transmitting video signals for a plurality of subscriber terminals (15) from a headend terminal (10) to a distribution terminal (13), and converts the transmitted signals at the distribution terminal (13) into electrical signals for distribution to a plurality of subscriber terminals (15) over a plurality of coaxial cables (14). The distribution terminal (13) further receives electrical service request signals from each of the plurality of subscriber terminals (15), and converts each received service request signal into an optical service request signal for transmission to the headend terminal (10) via an optical fiber (12). The headend terminal (10) further converts each received transmitted optical service request signal into an electrical service request signal for processing by the headend terminal (10) to control the selection of video signals for transmission to the distribution terminal (13).

## CATV SYSTEM WITH SHARED FIBER OPTIC LINK

### BACKGROUND OF THE INVENTION

The present invention generally pertains to electronic communication systems and is particularly directed to the use of fiber optics in cable television (CATV) systems.

In a headend terminal of a typical CATV system, a plurality of video signals from separate video signal sources are amplitude modulated onto a plurality of carriers and then multiplexed to provide a multiplexed electrical signal. The multiplexed electrical signal is then transmitted to a distribution terminal from which it is further transmitted to each of a plurality of subscriber terminals over a corresponding plurality of coaxial cables that couple the distribution terminal to the plurality of subscriber terminals. Service request signals generated in the subscriber terminals typically are transmitted back to the headend terminal over telephone lines.

The use of optical fibers to transmit television signals in CATV systems has been suggested because of the superior long-distance transmission characteristics of optical fibers in comparison with the long-distance transmission characteristics of coaxial cable. Hightower, "Economic FO System for New Residential Services", Telephony, March 17, 1986, p. 44, describes a CATV system in which the multiplexed electrical signal is converted at a central office to a multiplexed optical signal and then transmitted over a single-mode optical fiber to a multimode splitter, from which the multiplexed optical signal is distributed to a plurality of subscriber terminals over a corresponding plurality of multimode optical fibers. Service request signals from the plurality of subscriber terminals are provided over separate fiber optic links to a second multimode splitter which transmits the service request signals over a multimode optical fiber to the central office. A switch used for multiplexing the signals at the central office is controlled in response to the service request signals.

The cost of such a CATV system using fiber optic links to each of the subscriber terminals is very high in comparison with the cost of a typical prior art CATV system, which uses coaxial cable links to each of the subscriber terminals.

### SUMMARY OF THE INVENTION

The present invention provides an economical CATV system that uses a single optical fiber for transmitting information signals, such as video signals, for a plurality of subscriber terminals from a headend terminal to a distribution terminal, and converts the transmitted signals at the distribution terminal into electrical signals for distribution to the plurality of subscriber terminals over a plurality of electrical signal conduits, such as coaxial cables. The CATV system of the present invention thereby utilizes the superior long distance transmission characteristics of optical fibers for the link between the headend terminal and the distribution terminal, and utilizes the lower cost coaxial cable for the plurality of links between the distribution terminal and the subscriber terminals where the length of such links is such that the difference in transmission characteristics between coaxial cable and optical fibers is not as significant.

The CATV system of the present invention comprises a headend terminal that includes means for providing a plurality of video signals for a plurality of subscribers; switch means for selecting the plurality of video signals to provide a multiplexed electrical signal; and means for converting the multiplexed electrical signal into a multiplexed optical signal for transmission; a single optical fiber for carrying the transmitted multiplexed optical signal from the converter to the distribution terminal; and a distribution terminal that includes means for receiving said transmitted multiplexed optical signal and for converting it into a multiplexed electrical signal for distribution to the different subscriber terminals. Accordingly, preexisting CATV systems that use coaxial cable throughout their distribution links may be readily retrofitted with the system of the present invention without having to replace the coaxial cable links from the distribution terminal to the subscriber terminals.

In one aspect of the present invention, the distribution terminal further includes means for receiving electrical service request signals from each of said plurality of subscriber terminals, and means for converting each received service request signal into an optical service request signal for transmission to the headend terminal; the system further includes an optical fiber for transmitting to the headend terminal from the distribution terminal a plurality of said optical service request signals converted from said service request signals received by the distribution terminal from said plurality of subscriber terminals; and the headend terminal further comprises means for receiving each said transmitted optical service request signal and for converting it into an electrical service request signal for processing by the headend terminal.

Additional features of the present invention are described in relation to the description of the preferred embodiment.

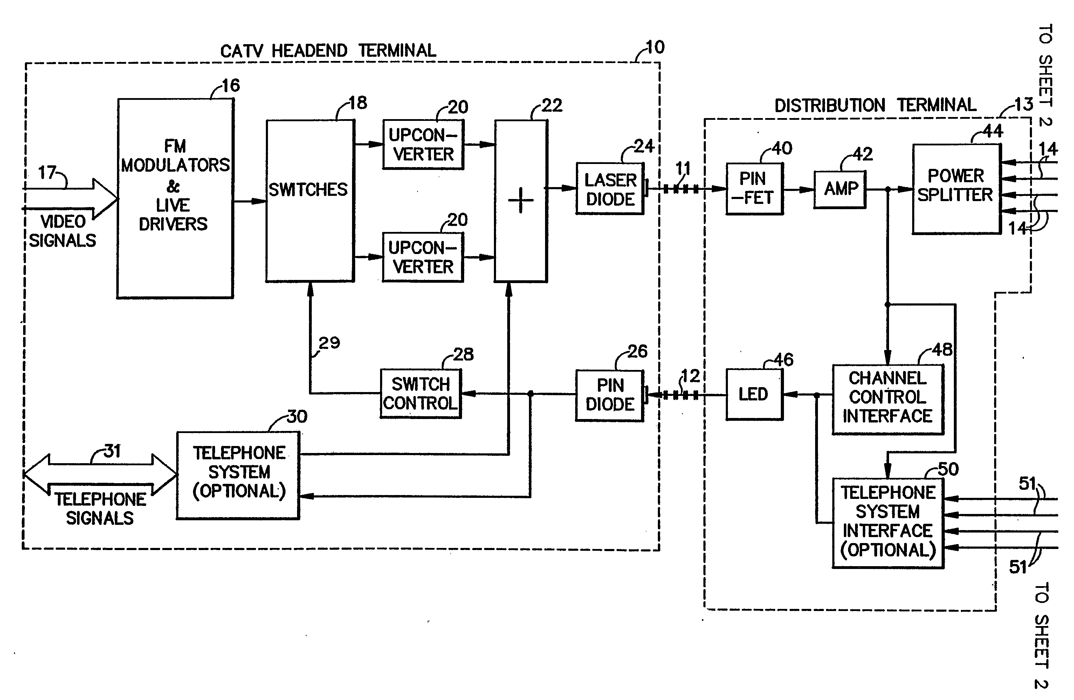

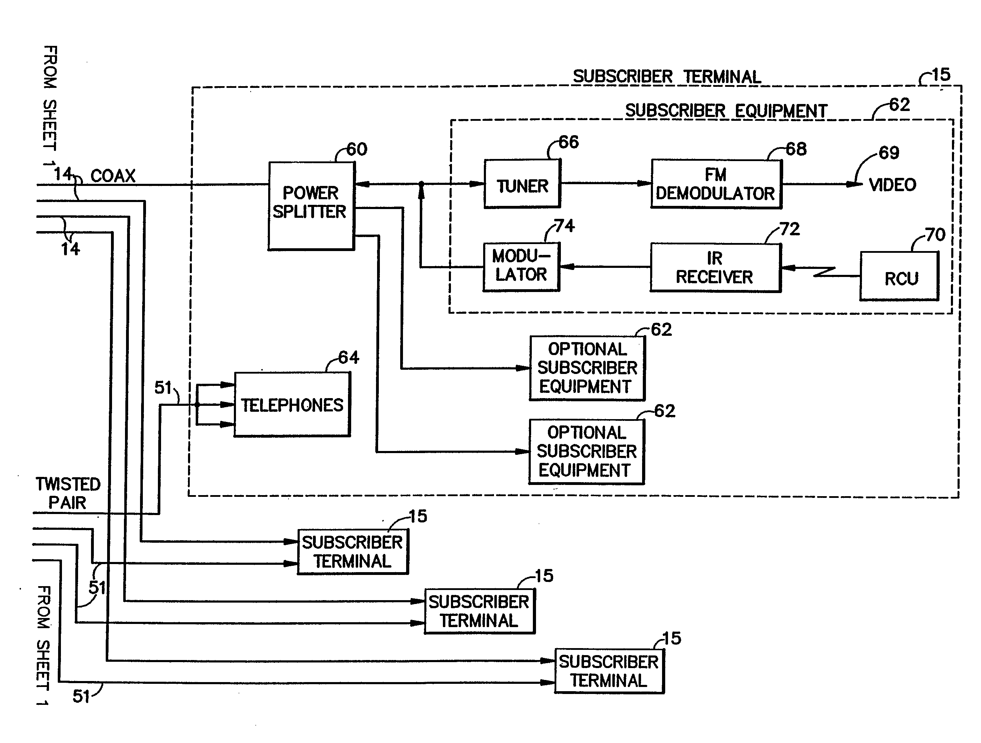

## BRIEF DESCRIPTION OF THE DRAWING

The sole figure of the Drawing is a diagram of a preferred embodiment of the CATV system of the present invention.

## DESCRIPTION OF THE PREFERRED EMBODIMENT

Referring to the Drawing a preferred embodiment of a CATV system according to the present invention includes a headend terminal 10, a single-mode optical fiber 11, a multimode optical fiber 12, a distribution terminal 13, a plurality of coaxial cables 14 and a plurality of subscriber terminals 15. It is to be understood that the system may further include additional distribution terminals, with a plurality of additional subscriber terminals being coupled to each of the additional distribution terminals by coaxial cables in the manner shown in the Drawing, and with each distribution terminal being coupled to the headend terminal 10 by a separate single-mode optical fiber.

The headend terminal 10 includes a plurality of FM modulators and line drivers 16, a plurality of digital switches 18, a plurality of upconverters 20, a signal combining unit 22, a laser diode 24 for each distribution terminal 13, a PIN diode 26 for each distribution terminal 13, a switch control unit 28, and, optionally, a telephone system interface unit 30.

Each distribution terminal 13 includes a PIN FET 40, an amplifier 42, a power splitter 44, a light emitting diode (LED) 46, a channel control interface unit 48, and, optionally, a telephone system interface unit 50.

Each subscriber terminal 14 includes a power splitter 60, one or more subscriber equipment sets 62, and one or more telephones 64. Each subscriber equipment set 62 includes a tuner 66, an FM demodulator 68, a remote control unit (RCU) 70, and infrared (IR) receiver 72, and a modulator 74.

In the headend terminal 10, a plurality of video signals 17 from various video sources are frequency modulated onto frequency modulated (FM) carriers by the FM modulators and line drivers 16. The switches 18 select twelve of the video signals 17 and provide them as frequency-division-multiplexed video signals to the signal combining unit 22 via the upconvertors 20. An FM signal carrying twelve multiplexed video signals is then provided to the laser diode 24, which converts the combined multiplexed signals into an optical multiplexed signal for transmission over the single-mode optical fiber 11. The single-mode optical fiber 11 is connected to the laser diode 24 for transmitting an optical signal containing twelve multiplexed video signals for a plurality of subscriber terminals 15.

In the distribution terminal 13, the PIN FET 40 is connected to the single-mode optical fiber 11 for receiving the optical multiplexed signal transmitted over the single-mode optical fiber 11 and for converting the received optical signal into an electrical multiplexed signal. The electrical signal from the PIN FET 40 is amplified by the amplifier 42 and provided to the power splitter 44. The power splitter 44 further conditions the amplified multiplexed electrical signal for transmission to the subscriber terminals 15 over the respective coaxial cables 14.

Each subscriber terminal 15 contains one or more sets of subscriber equipment 62. The power splitter 60 in each subscriber terminal 15 provides the signal received over the respective coaxial cable 14 to the different subscriber equipment sets 62. In each subscriber equipment set 62, the received video signals are passed through the tuner 66, which is tuned to select one of the frequency-division-multiplexed video signals for viewing, and then through the FM demodulator 68 to provide the selected video signal 69.

In order to provide a service request signal for transmission back to the headend terminal, the remote control unit (RCU) 70 is operated. The RCU provides a coded infrared (IR) signal which is detected by the IR receiver 72, which in turn converts the received IR signal into an electrical signal. The modulator 74 modulates the service request signal for transmission back over the coaxial cable 14 to the distribution terminal 13.

In the distribution terminal 13, service request signals received from the subscriber terminals 15 are provided to the channel control interface unit 48, which provides the service request signals to the LED 46. The LED 46 converts the service request signals from the channel control interface unit 48 into optical service request signals. The multimode optical fiber 12 is connected to the LED 46 for transmitting the optical service request signals to the headend terminal 10, where they are received by the PIN diode 26 and converted into electrical service request signals.

In the headend terminal 10, the switch control unit 28 processes the service request signal converted by the PIN diode 26 and provides switching signals on line 29 for controlling the switches 18 in accordance with such service request signals.

Cable systems providing CATV services sometimes also provide telephone services. The CATV system described herein optionally includes equipment for providing television services together with the CATV services. In the headend terminal the telephone system interface unit 30 receives and sends telephone signals 31 from and to telephone lines (not shown). The interface unit 30 conditions received telephone signals for combination by the signal combining unit 22 with a group of twelve multiplexed video signals. The telephone signals are likewise converted to optical signals and transmitted over a single-mode optical fiber 11 to the distribution terminal 13, where after reconversion to electrical signals by the PIN FET 40, the telephone signals are transferred by the power splitter 44 to the telephone system interface unit 50. Telephone signals are communicated between the interface unit 50 and the telephones 64 in the subscriber terminals 15 via twisted pairs 51. Telephone signals from the subscriber terminals 15 are provided by the interface unit 50 to the LED 46, which converts such telephone signals into optical telephone signals for transmission over the multimode optical fiber 12 to the PIN diode 26 in the headend terminal 10. The PIN diode 26 converts the optical telephone signals into electrical telephone signals and provides the same to the telephone interface unit 30 which sends such telephone signals 31 over the telephone lines.

**Claims**

1. A CATV system in which information signals for a plurality of subscribers are transmitted from a headend terminal (10) to a distribution terminal (13), and then distributed to different subscriber terminals (15), comprising
a headend terminal (10) including
means (16) for providing a plurality of information signals (17) for a plurality of subscriber terminals (15);
switch means (18) for selecting the plurality of information signals (17) to provide a composite electrical signal; and
means (24) for converting the composite electrical signal into a composite optical signal for transmission;
a single optical fiber (11) for carrying the transmitted composite optical signal from the converter (24) to the distribution terminal (13); and
a distribution terminal (13), including
means (40, 42, 44) for receiving said transmitted composite optical signal and for converting it into electrical signals for distribution to the different subscriber terminals (15).

2. A system according to Claim 1, further comprising
a plurality of coaxial cables (14) coupled to said subscriber terminals (15) for distributing the converted multiplexed electrical signal from the distribution terminal (13) to each of said subscriber terminals (15).

3. A system according to Claim 1, wherein the distribution terminal (13) further comprises
means (48) for receiving electrical service request signals from each of said plurality of subscriber terminals (15); and
means (46) for converting each received service request signal into an optical service request signal for transmission to the headend terminal (10);
wherein the system further comprises an optical fiber (12) for transmitting to the headend terminal (10) from the distribution terminal (13) a plurality of said optical service request signals converted from said service request signals received by the distribution terminal (13) from said plurality of subscriber terminals (15); and
wherein the headend terminal (10) further comprises means (26) for received each said transmitted optical service request signal and for converting it into an electrical service request signal for processing by the headend terminal (10).

4. A system according to Claim 3, wherein the headend terminal (10) further comprises means (28) for controlling said switch means (18) in response to said converted electrical service request signals.